# EUROPÄISCHE PATENTSCHRIFT

(11) **EP 0 894 116 B1**
(45) Veröffentlichungstag und Bekanntmachung des Hinweises auf die Patenterteilung: **15.12.1999**
(21) Anmeldenummer: 97918139.3
(22) Anmeldetag: 17.04.1997
(51) Int. Cl.: C08L 77/00, C08K 5/50, C07F 9/50

(54) **OXIDATIONSSTABILISIERTE POLYAMIDFORMMASSEN**
OXIDATION-STABILISED POLYAMIDE MOULDING MATERIALS
MATIERES DE MOULAGE POLYAMIDE RENDUES STABLES A L'OXYDATION

(30) Priorität: 19.04.1996 DE 19615484
(43) Veröffentlichungstag der Anmeldung: 03.02.1999
(73) Patentinhaber: BASF AKTIENGESELLSCHAFT, 67056 Ludwigshafen (DE)
(72) Erfinder: GRUTKE, Stefan, D-67434 Neustadt (DE); COMBA, Peter, D-69151 Neckargemünd (DE); KATSICHTIS, Charis,, 69134 Heidelberg (DE)
(86) Internationale Anmeldenummer: EP9701910
(87) Internationale Veröffentlichungsnummer: WO9740100

(56) Entgegenhaltungen:
- CH-A- 472 458
- US-A- 3 294 870
- CHEMICAL ABSTRACTS, vol. 122, no. 4, 23.Januar 1995 Columbus, Ohio, US; abstract no. 44921, CHAMPNESS, NEIL R. ET AL: "Mixed phosphathia macrocyclic chemistry: synthesis and characterization of [M(Ph2[14]aneP2S2)]2+ (M = Pd or Pt) and [RhCl2(Ph2[14]aneP2S2)]+ (Ph2[14]aneP2S2 = 8,12-diphenyl-1,5-dithia- 8,12-diphosphacyclotetradecane)" XP002035149 & J. CHEM. SOC., DALTON TRANS. (1994), (20), 3031-7 CODEN: JCDTBI;ISSN: 0300-9246, 1994,
- CHEMICAL ABSTRACTS, vol. 102, no. 17, 29.April 1985 Columbus, Ohio, US; abstract no. 149381, KYBA, EVAN P. ET AL: "Synthesis of 14-membered phosphorus-sulfur P2S2 and P3S macrocycles which contain the 1-thio-2-(phenylphosphino)benzene moiety. Determination of stereochemistries of the free ligands and of a platinum(II) complex" XP002035150 & J. AM. CHEM. SOC. (1985), 107(7), 2141-8 CODEN: JACSAT;ISSN: 0002-7863, 1985,
- CHEMICAL ABSTRACTS, vol. 98, no. 6, 7.Februar 1983 Columbus, Ohio, US; abstract no. 45858, ISSLEIB, K. ET AL: "Coordination chemistry of phosphines and phosphine oxides. XXXI. Cobalt and rhodium complexes of primary mercaptoalkylphosphines and remarks on the complex formation of quadridentate P,P,S,S ligands" XP002035151 & Z. ANORG. ALLG. CHEM. (1982), 491, 163-74 CODEN: ZAACAB;ISSN: 0044-2313, 1982,
- CHEMICAL ABSTRACTS, vol. 97, no. 9, 30.August 1982 Columbus, Ohio, US; abstract no. 71596, KNOWLES, W. S. ET AL: "Studies of asymmetric homogeneous catalysts" XP002035152 & ADV. CHEM. SER. (1982), 196(CATAL. ASPECTS MET. PHOSPHINE COMPLEXES), 325-36 CODEN: ADCSAJ;ISSN: 0065-2393, 1982,

## Beschreibung

Die vorliegende Erfindung betrifft thermoplastische Formmassen, enthaltend

| | |
|---|---|
| 30 bis 100 Gew.-% | einer Mischung aus Polyamid und einer stabilisierend wirksamen Menge einer Kupferverbindung erhältlich durch Umsetzung von Kupfer(I)salzen mit Phosphinchelatliganden und |
| 0 bis 70 Gew.-% | weiterer Zusatzstoffe. |

Weiterhin betrifft die Erfindung die Verwendung der Formmassen zur Herstellung von Formkörpern jeglicher Art und die hierbei erhältlichen Formkörper.

Die mangelnde Stabilität von Polyamiden gegenüber thermischer Oxidation ist seit langem bekannt, doch wird mit den bisher bekannten Stabilisatoren der oxidative Abbau der Polyamidoberfläche nicht ausreichend verzögert.

So beschreibt die EP-A 463 512 Stabilisatorkombinationen aus Kupfer(I)halogeniden, Triphenylphosphin und Aminen für schlagzäh-modifizierte Polyamide. Der Zusatz von aminischen Antioxidantien bewirkt oftmals direkte Verfärbungen sowie Verfärbungen bei thermischer Belastung.

Es ist aus der CH-A 472 458 bekannt, den Polyamiden Kupfer(I)salze und Triphenylphosphin besonders in Kombination mit Kaliumiodid als Wärmestabilisator zuzusetzen. Diese Polyamide zeigen dennoch keine befriedigende thermische Stabilität, was sich in der Verschlechterung der Schlagzähigkeit und des Elastizitätsmoduls widerspiegelt. Obendrein bilden die Stabilisatoren aufgrund ihrer Wasserlöslichkeit häufig einen Belag und damit Fehlstellen, die zu Flecken und Verfärbungen führen.

Der vorliegenden Erfindung lagen thermoplastische Formmassen zugrunde, die eine verbesserte Wärmestabilisierung zeigen und obendrein weniger zu Verfärbungen neigen.

Demgemäß wurden die oben definierten thermoplastischen Formmassen gefunden.

Die zur Stabilisierung zugesetzten Kupferverbindungen sind erhältlich durch die Umsetzung von Kupfer(I)salzen mit bekannten und neuen Phosphinchelatliganden. Gegenstand der Erfindung sind ferner Phosphorsulfoverbindungen der Formel II, die als Chelatliganden eingesetzt werden können.

Als Kupfer(I)salze sind sowohl Kupfersalze von organischen Säuren beispielsweise Essigsäure als auch von anorganischen Säuren wie der Cyanwasserstoffsäure oder der Thiocyanwasserstoffsäure, bevorzugt der Halogenwasserstoffsäuren, geeignet. Aus der Gruppe der Kupferhalogenide Kupferfluorid, Kupferchlorid, Kupferbromid, Kupferiodid wird den drei letztgenannten der Vorzug gegeben, wobei das Kupferiodid besonders geeignet ist.

Als Phosphindhelatliganden können vorteilhaft Verbindungen der allgemeinen Formel (I) 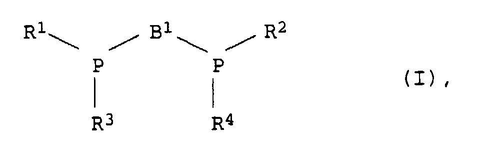 in der
- B¹: C₁-C₆-Alkylen, Naphthylen, Phenylen, Benzylen,
- R¹ und R²: unabhängig voneinander C₁-C₈-Alkyl, C₅-C₈-Cycloalkyl oder Phenyl, das gegebenenfalls 1 bis Sfach mit C₁-C₄-Alkyl substituiert ist,
- R³ und R⁴: unabhängig voneinander C₁-C₈-Alkyl, C₅-C₈-Cycloalkyl, Phenyl, das gegebenenfalls mit C₁-C₄-Alkyl substituiert ist, -B¹-PR²R², B²-SR⁵, B²-OR⁵ sowie R³ und R⁴ gemeinsam -B²-PR²-B³- oder -B²-PR²-B³-PR²-B⁴- bedeuten und B², B³, B⁴ unabhängig voneinander für C₁-C₆-Alkylen, Naphthylen, Phenylen, Benzylen und
- R⁵: für C₁-C₄-Alkyl oder Wasserstoff stehen,
verwendet werden.

Als Substituenten B¹, B², B³ und B⁴ sind unabhängig voneinander Methylen, Ethylen, n-Propylen, Isopropylen, n-Butylen, n-Pentylen, n-Hexylen, 1,1'- oder 2,2'-Naphthylen, 1,4-Phenylen und para-Benzylen geeignet.

Als Substituenten R¹, R², R³, R⁴ und R⁵ sind unabhängig voneinander Methyl, Ethyl, n-Propyl, Isopropyl, n-Butyl, Isobutyl, sec-Butyl und tert.-Butyl geeignet.

Reste R¹, R², R³ und R⁴ sind darüber hinaus z.B. Pentyl, Isopentyl, Neopentyl, tert.-Pentyl, Hexyl, 2-Methylpentyl, Heptyl, Octyl, 2-Ethylhexyl, Isooctyl, Cyclopentyl, Cyclohexyl, Cycloheptyl, Cyclooctyl, 2-, 3- oder 4-Methylphenyl, 2-, 3- oder 4-Ethylphenyl, 4-Isopropylphenyl, 2,4,6-Trimethylphenyl, 2,4-Dimethylphenyl und 4-tert.-Butylphenyl.

Bevorzugt werden Kupferverbindungen, die durch Umsetzung mit Phosphinchelatliganden der allgemeinen Formel (II) 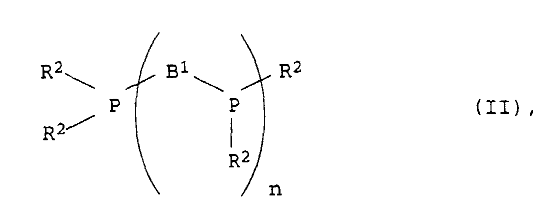 in der B¹ und R² die obige Bedeutung haben und n für die Zahl 1, 2 oder 3 steht, erhalten werden.

Ebenfalls bevorzugt werden Phosphinchelatliganden, in denen B¹ eine Methylen-, Ethylen-, Propylen-, Butylen- oder Naphthylenbrücke ist.

Für R¹, R², R³ und/oder R⁴ werden unverzweigte Alkylreste bevorzugt. Weiterhin werden unsubstituierte Phenylreste bevorzugt.

Besonders bevorzugt werden Phosphinchelatliganden, in denen R¹ und R² für Cyclohexyl oder Phenyl steht.

Ebenfalls besonders bevorzugt werden Phosphinchelatliganden II, in denen n=1 ist.

Geeignete Phosphinchelatliganden sind beispielsweise 1,2-Bis-(dimethylphosphino)-ethan, Bis-(2-diphenylphosphinoethyl)-phenylphosphin, l,6-(Bis-(diphenylphosphino)-hexan und 1,5-Bis-(diphenylphosphino)-pentan.

Besonders bevorzugte Phosphinchelatliganden sind beispielsweise Bis-(diphenylphosphino)methan, 1,2-Bis-(diphenylphosphino)ethan, 1,3-Bis-(diphenylphosphino)propan, 2,2'-Bis-(diphenylphosphino)-1,1'-binaphthyl, 1,3-Bis-(dicyclohexylphosphino)propan und 1,4-Bis(diphenylphosphino)butan.

Die Phosphinchelatliganden können nach den für phosphororganische Verbindungen allgemein bekannten Reaktionen, wie in Advanced Organic Chemistry: reactions, mechanisms and structure, J. March, Wiley-Interscience Publication, 4, 1992, S. 413 und Inorg. Chemistry of the Transition Elements - Vol. 6, The Chemical Society, 1978, Johnson, Gilbert, S. 272 ff, Methoden der organischen Chemie, Houben-Weyl, XII/1, Georg Thieme Verlag, Stuttgart, 1963, S. 17-66, beschrieben, hergestellt werden. Beispielsweise durch Umsetzung von Phosphorhalogeniden mit Grignardverbindungen oder durch Umsetzung von Phosphinen mit Alkylhalogeniden unter reduzierenden Bedingungen, z.B. Natriumamid in flüssigem Ammoniak oder Natrium in flüssigem Ammoniak. Nach demselben Reaktionsprinzip ist es durch Wahl von Dihalogenalkanen oder Dihalogenaromaten bzw. Monoalkylphosphinen oder Arylphosphin möglich, zwei Phosphine mit einer Alkylen- bzw. Arylenbrücke zu verknüpfen.

Einige der Phosphinchelatliganden sind handelsüblich.

Weiter bevorzugt werden Kupferverbindungen, die durch Umsetzung mit Phosphorsulfoverbindungen der allgemeinen Formel (III) 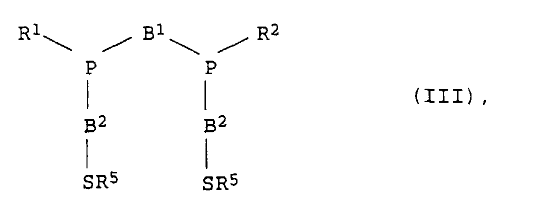 in der
- B¹ und B²: unabhängig voneinander C₁-C₆-Alkylen, Naphthylen, Phenylen, Benzylen,
- R¹ und R²: unabhängig voneinander C₁-C₈-Alkyl, C₅-C₈-Cycloalkyl oder Phenyl, das gegebenenfalls mit C₁-C₄-Alkyl substituiert ist, und
- R⁵: C₁-C₄-Alkyl oder Wasserstoff
bedeuten,
erhalten werden.

Die Herstellung der Phosphinchelatliganden III erfolgt ebenfalls nach bekannten Reaktionen.

In einem ersten Reaktionsschritt werden beispielsweise 2 Mol eines Monoalkylphosphins mit einem Mol Dibromalkan unter reduzierenden Bedingungen wie Natrium in flüssigem Ammoniak zum Bis-phosphin IV umgesetzt, gemäß folgender allgemeiner Reaktionsgleichung

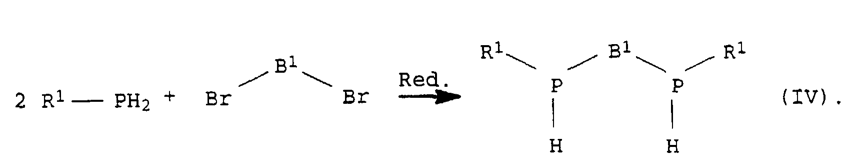

Die weitere Synthese erfolgt durch Reaktion von IV mit einem Monothiacyclus und weiterhin reduzierenden Bedingungen unter Ringöffnung. Das so erhaltene Dithiol kann gegebenenfalls nach bekannten Reaktionen in seinen Thioether überführt werden.

Der Begriff Chelatliganden soll lediglich zum Ausdruck bringen, daß die Phosphinverbindungen über mehrere Koordinationsstellen für mögliche Komplexbildung verfügen.

Die Phosphinchelatliganden werden mit dem Kupfer(I)salz im molaren Verhältnis 1:1 bis zu einem Verhältnis 5:1 umgesetzt. Bevorzugt wird dabei die ein- bis dreifach molare Menge Phosphinchelatligand gewählt. Es wird angenommen, daß die Kupfer(I)salze mit den Phosphinchelatliganden koordinative Verbindungen bilden, so daß beim Vorhandensein von mehreren Koordinationsstellen natürlich auch Mischungen unterschiedlich koordinierter Kupferverbindungen auftreten können. Abhängig von dem gewählten Verhältnis Phosphinchelatligand zum Kupfer(I)salz kann im Gemisch auch unumgesetzter Ligand vorhanden sein, was jedoch nicht nachteilig ist.

Zur Herstellung der Kupferverbindung werden die Kupfer(I)halogenide mit den Phosphinchelatliganden in einem inerten Lösungs-/Verdünnungsmittel oder lösungsmittelfrei in der Schmelze zur Reaktion gebracht.

Inerte Lösungs-/Verdünnungsmittel sind beispielsweise Ketone wie Aceton und Cyclohexan, cyclische Ether wie Tetrahydrofuran und Dioxan, Dialkylether wie Diethylether, halogenierte Kohlenwasserstoffe wie Methylenchlorid, Dichlorethan, Tetrachlorkohlenstoff, und Chloroform. Dabei wird Aceton, Tetrahydrofuran und Chloroform als Lösungsmittel der Vorzug gegeben.

Bevorzugt ist die Umsetzung in der Schmelze, da das Lösungsmittel anschließend nicht entfernt werden muß.

In einer bevorzugten Ausführungsform wird das Kupfer(I)salz dem geschmolzenen oder gelösten Phosphinchelatliganden zudosiert.

Es ist ebenfalls vorteilhaft dem Kupfer(I)salz eine Lösung des Phosphinchelatliganden zuzufügen. Es ist möglich, die Umsetzung bereits bei Raumtemperatur durchzuführen. Besonders empfiehlt sich ein Temperaturbereich von 20 bis 60°C. Abhängig von der gewählten Temperatur ist die Reaktion nach 2 bis 8 Stunden beendet, wobei längere Reaktionszeiten bei den niedrigeren Temperaturen nötig sind und umgekehrt.

Für die Umsetzung in der Schmelze werden Temperaturen, oberhalb des jeweiligen Schmelzpunktes, in der Regel von 130 bis 350°C, bevorzugt 240 bis 280°C, benötigt.

Da das unumgesetzte Kupfer(I)salz in Suspension vorliegt, ist es vorteilhaft, während der Umsetzung zu rühren.

Die Umsetzung in einer Inertgasatmosphäre wie Stickstoff ist zweckmäßig, wenn auch nicht erforderlich, da die Oxidationsstabilität der Kupferverbindungen bei höheren Temperaturen wie der Schmelze leicht nachläßt.

Es wurde nun festgestellt, daß sich die durch die Umsetzung von Kupfer(I)salzen mit Phosphinchelatliganden erhaltenen Kupferverbindungen hervorragend zur Stabilisierung von thermoplastischen Formmassen enthaltend 30 bis 100 Gew.-% Polyamid und 0 bis 70 Gew.-% weiterer Zusatzstoffe eignen.

Bevorzugt enthalten die Formmassen die Kupferverbindung in einer Menge von 10 bis 1 000 ppm, besonders bevorzugt von 50 bis 500 ppm Kupfer, bezogen auf Polyamid. Höhere Mengen an Kupferverbindung, z.B. 2 Gew.-% vorzugsweise 1 Gew.-% in Konzentraten sind möglich.

Die erfindungsgemäßen Formmassen enthalten 30 bis 100, bevorzugt 40 bis 90 und insbesondere 60 bis 80 Gew.-% einer Mischung aus Polyamid und einer stabilisierend wirksamen Menge einer Kupferverbindung erhältlich durch Umsetzung von Kupfer(I)salzen mit Phosphinchelatliganden (Komponente A).

Die Polyamide der erfindungsgemäßen Formmassen weisen im allgemeinen eine relative Viskosität ηᵣₑₗ von 1,7 bis 5,0 auf, bestimmt in einer 1 gew.-%-igen Lösung in 96 gew.%iger Schwefelsäure bei 25°C. Polyamide mit einer relativen Viskosität von 1,7 bis 4,5, insbesondere von 2,5 bis 4,0 werden bevorzugt verwendet.

Diese relativen Viskositäten von 2,5 bis 4,0 entsprechen den Viskositätszahlen (VZ) von 120 bis 220 ml/g (gemessen gemäß ISO 307, DIN 53727).

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien beispielhaft Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Derartige teilaromatische, teilkristalline Copolyamide sind beispielsweise aufgebaut aus:
A₁) 20 - 90 Gew.-% Einheiten, die sich von Terephthalsäure und Hexamethylendiamin ableiten,
A₂) 0 - 50 Gew.-% Einheiten, die sich von ε-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
wobei der Anteil der Komponente (A₂) und/oder (A₃) und/oder (A₄) mindestens 10 Gew.-% beträgt.

Die Komponente A₁) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure, Phenoxyterephthalsäure, wobei Isophthalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien unter anderem Suberinsäure, Azelainsäure oder Sebacinsäure als Vertreter der aliphatischen Dicarbonsäuren, 1,4-Butandiamin, 1,5-Pentandiamin, Piperazin als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
   oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten.

Enthält die Komponente (A₄) symmetrische Dicarbonsäuren, bei denen die Carboxylgruppen in para-Stellung stehen, so empfiehlt es sich, diese mit (A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Enthält die Komponente (A₄) cyclische aliphatische Diamine als Polyamidbausteine, so sind hierbei insbesondere als Diaminkomponenten Bis(4-aminocyclohexyl)-methan, Bis(4-amino-3-methylcyclohexyl)methan, Bis(4-aminocyclohexyl)-2,2-propan, bis(4-amino-3-methylcyclohexyl)-2,2-propan, Cyclohexandiamin und Isophorondiamin bevorzugt. Derartige teilaromatische, teilkristalline Polyamide werden in der DE-A 44 04 250 beschrieben.

Weiterhin haben sich solche teilaromatischen Copolyamide als besonders vorteilhaft erwiesen, deren Triamingehalt weniger als 0,5, vorzugsweise weniger als 0,3 Gew.-% beträgt. Die Herstellung dieser Copolyamide kann nach den in den EP-A 129 195 und 129 196 beschriebenen Verfahren erfolgen.

Als weiteren Bestandteil können die erfindungsgemäßen thermoplastischen Formmassen 0 bis 70, vorzugsweise bis 35, insbesondere 15 bis 35 Gew.% weitere Zusatzstoffe enthalten. Dies sind vor allem faser- oder teilchenförmige Füllstoffe (Komponente B) oder kautschukelastische Polymerisate (Komponente C), sowie deren Mischungen.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid mit einer Schlichte und einem Haftvermittler ausgerüstet sein. Im allgemeinen haben die verwendeten Glasfasern einen Durchmesser im Bereich von 6 bis 20 µm, vorzugsweise 10 bis 14 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Die Formmassen können 0 bis 30, vorzugsweise bis 20 und insbesondere 10 bis 15 Gew.-% eines kautschukelastischen Polymerisats C enthalten (oft auch als Schlagzähmodifier oder Kautschuk bezeichnet). Bevorzugte kautschukelastische Polymerisate sind Polymerisate auf Basis von Olefinen, die aus folgenden Komponenten aufgebaut sind:
C₁) 40 bis 100 Gew.-% mindestens eines α-Olefins mit 2 bis 8 C-Atomen
C₂) 0 bis 50 Gew.-% eines Diens
C₃) 0 bis 45 Gew.-% eines C₁-C₁₂-Alkylesters der Acrylsäure oder Methacrylsäure oder Mischungen derartiger Ester,
C₄) 0 bis 40 Gew.-% einer ethylenisch ungesättigen Mono- oder Dicarbonsäure oder einem funktionellen Derivat einer solchen Säure
C₅) 0 bis 40 Gew.-% eines Epoxygruppen enthaltenden Monomeren,
C₆) 0 bis 5 Gew.-% sonstiger radikalisch polymerisierbaren Monomerer,
mit der Maßgabe, daß die Komponente (C) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere C₂) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2-8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester C₃) an den Olefinpolymerisaten beträgt 0-60, vorzugsweise 10-50 und insbesondere 30-45 Gew.-%.

Anstelle der Ester C₃) oder zusätzlich zu diesen können in den Olefinpolymerisaten auch säurefunktionelle und/oder latent säurefunktionelle Monomere ethylenisch ungesättigter Mono- oder Dicarbonsäuren C₄) oder Epoxygruppen aufweisende Monomere C₅) enthalten sein.

Als Beispiele für Monomere C₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln IV-VII zum Monomerengemisch in die Olefinpolymerisate eingebaut

R¹C(COOR²)=C (COOR³)R⁴ (IV)

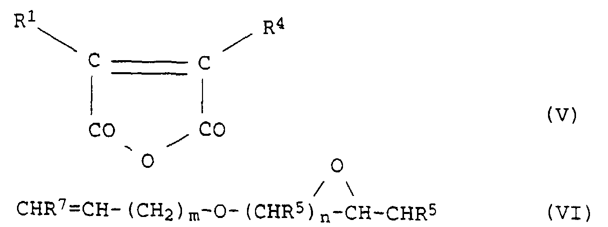

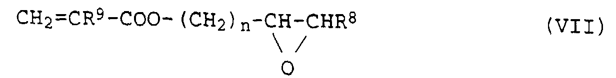

wobei die Reste R¹ - R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R¹ - R⁷ ist Wasserstoff, für m der Wert 0 oder 1 und für n der Wert 1. Die entsprechenden Verbindungen sind Maleinsäure, Fumarsäure, Maleinsäureanhydrid, C₄) bzw. Alkenylglycidylether oder Vinylglycidylether C₅).

Bevorzugte Verbindungen der Formeln IV, V, VI und VII sind Maleinsäure und Maleinsäureanhydrid als Komponente C₄) und Epoxygruppen-enthaltende Ester der Acrylsäure und/oder Methacrylsäure, wobei Glycidylacrylat und Glycidylmethacrylat (als Komponente C₅) besonders bevorzugt werden.

Der Anteil der Komponenten C₄) bzw. C₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere C₆) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere (C) beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (C) bis zu 5 Gew.%, vorzugsweise nicht mehr als 3 Gew.%, bezogen auf (C).

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere (C) können auch nach anderen üblichen Verfahren, z.B. durch Suspensionspolymerisation, hergestellt werden.

Weitere übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente, Weichmacher und Verarbeitungshilfsmittel. Ihr Anteil beträgt im allgemeinen bis zu 30, vorzugsweise bis zu 15 Gew.%, bezogen auf das Gesamtgewicht der Formmassen.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die stabilisierende Kupferverbindung kann direkt über einen Seitenextruder zum flüssigen Polyamid zugegeben werden oder als konzentrierte Mischung in Polyamid (Batch) zum Polyamid zudosiert werden.

Dabei wird die Zugabe zu einem frühen Verarbeitungsschritt bevorzugt, da somit eventuelle oxidative Schädigung durch die Verarbeitung vermieden werden kann.

In einer besonders bevorzugten Ausführungsform ist es auch möglich, gegebenenfalls die Komponenten B) und/oder C) schon in den Entgasungsextruder zum Präpolymeren der Komponente A) zu dosieren, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Die erfindungsgemäßen Formmassen zeichnen sich durch höhere Wärmeformbeständigkeit aus. Insbesondere lassen sie sich problemlos thermoplastisch verarbeiten und eignen sich demgemäß zur Herstellung von Fasern, Folien und Formkörpern. Außerdem zeigen sie deutlich bessere Farbergebnisse.

Eine weitere Steigerung der Wärmestabilisierung kann durch den Zusatz von Alkalihalogeniden erreicht werden. Aus der Gruppe der Lithium-, Natrium und Kaliumhalogenide werden die Kaliumsalze bevorzugt. Als Halogenide kommen beispielsweise die Fluoride, Chloride, und bevorzugt die Bromide und Iodide in Frage. Besonders hervorzuheben ist die Steigerung der Stabilisierungswirkung durch Kaliumbromid und Kaliumiodid.

In der Regel werden die anorganischen Alkalihalogenide der Formmasse in einer Menge von 1 bis 3 000 ppm, bevorzugt 10 bis 1000 ppm, bezogen auf Polyamid, zugesetzt. Dabei erfolgt die Zugabe gewöhnlich als Mischungen mit der Kupferverbindung.

Die nachfolgenden Beispiele sollen die Erfindung näher erläutern.

### Beispiele

A. Herstellung von Kupferverbindungen
a) In Gegenwart eines Verdünnungsmittels
   10 g (0,062 mol) Kupfer(I)iodid wurden unter Stickstoff in 40 ml Chloroform vorgelegt und zu der Suspension unter Rühren 100 ml einer 1,25 molaren Lösung (0,125 mol) des Phosphinchelatliganden getropft. Das Lösungsmittel wurde dem Entstehen einer klaren Lösung nach 2 bis 8 Stunden entfernt.
b) Ohne Verdünnungsmittel
   2 mol Phosphinchelatligand wurden im Temperaturbereich von 140 bis 142°C unter Stickstoff aufgeschmolzen und mit 166 g (1 mol) Kupfer(I)iodid portionsweise über einen Zeitraum von 2 h versetzt. Nach 3 h war die Reaktion beendet.

B. Allgemeine Herstellung der thermoplastischen Formmassen (Beispiele 1 bis 9)
Es wurden Polyamid 66 mit einer Viskositätszahl VZ (0,5 gew.-%ig PA66 in 96 gew.-%iger Schwefelsäure bei 25°C) von 150 ml/g (Ultramid® A3 der BASF AG) bzw. Polyamid 6 mit einer Viskositätszahl VZ (0,5 gew.-%ig PA6 in 96 gew.-%iger Schwefelsäure bei 25°C) von 150 ml/g (Ultramid® B3 der BASF AG) gegebenenfalls mit einer Glasfaser mit einem Durchmesser von 10 µm (Nr. 3540 der Fa. PPG) und der entsprechenden Kupferverbindung sowie gegebenenfalls Kaliumiodid auf einem Zweischneckenextruder (ZSK 57 der Fa. Werner und Pfleiderer) gemäß den in Tabelle 1 angegebenen Mengenverhältnissen konfektioniert. Die Konzentration der Stabilisatorsysteme beträgt 250 ppm Kupfer sowie gegebenenfalls 750 ppm Kaliumiodid bezogen auf PA. Das entstandene Granulat wurde getrocknet und zu Probekörpern gemäß DIN 53455/53453 verarbeitet.
In gleicher Weise wurden zum Vergleich (Beispiele 10 bis 13) Polyamide mit Kupfer(I)iodid/Triphenylphosphin (250 ppm Kupfer bezogen auf Polyamid) als Stabilisator, gegebenenfalls mit der Glasfaser sowie gegebenenfalls Kaliumiodid (750 ppm Kaliumiodid bezogen auf Polyamid) konfektioniert.
Die Zusammensetzung der Formmassen und der Vergleichsformmassen sind der Tabelle 1 zu entnehmen.

**Tabelle 1**

| Bsp. | Phosphinchelatligand | Herstellung nach | Kaliumiodid | Polyamid (Gew.-%) Glasfasergehalt (GF) (Gew.-%) |
|---|---|---|---|---|
| 1 | Bis-(diphenylphosphino)methan | b) | + | PA66 100 %/ - |
| 2 | 1,2-Bis-(diphenylphosphino) ethan | b) | - | PA6 70 %/GF 30 % |
| 3 | 1,2-Bis-(diphenylphosphino)ethan | a) | + | PA66 100 %/ - |
| 4 | 1,2-Bis-(diphenylphosphino) ethan | b) | + | PA66 70 %/GF 30 % |
| 5 | 1,2-Bis-(diphenylphosphino)ethan | a) | - | PA66 70 %/GF 30 % |
| 6 | 1,3-Bis-(diphenylphosphino)propan | a) | + | PA66 70 %/GF 30 % |
| 7 | 2,2'-Bis- (diphenylphosphino)-1,1'-binaphthyl | a) | + | PA66 70 %/GF 30 % |
| 8 | 1,3-Bis-(dicyclohexylylphosphino)propan | a) | + | PA66 70 %/GF 30 % |
| 9 | 1,3-Bis-[(2-mercaptoethyl)cyclohexylphosphino]propan | a) | + | PA66 70 %/GF 30 % |
| 10 | Triphenylphosphin | b) | + | PA66 100 %/ - |
| 11 | Triphenylphosphin | a) | + | PA66 100 %/ - |
| 12 | Triphenylphosphin | b) | - | PA66 70 %/GF 30 % |
| 13 | Triphenylphosphin | b) | + | PA6 70 %/GF 30 % |

C. Anwendungstechnische Eigenschaften der thermoplastischen Formmassen der Beispiele 1 bis 13
Ein Maß für die Stabilisierungswirkung von Additiven ist die Abnahme der Schlagzähigkeitswerte und des Zug-E-Moduls nach Lagerung bei erhöhter Temperatur. Hierfür wurden jeweils beide Werte vor sowie nach 240 bzw. 600 h Lagerung bei 150°C im Umlauftrockenofen ermittelt.
Die Probenvorbereitung und die Messung der Schlagzähigkeit nach Charpy (Schlagbiegeversuche) wurde gemäß DIN 53453 durchgeführt.
Die Probenvorbereitung und die Messung des Zug-E-Modul (Zugversuch) wurde nach DIN 53455 durchgeführt.

**Tabelle 2**

| Bsp. | Schlagzähigkeit nach Charpy [kJ/m²] | | | Zug-E-Modul [MPa] | | |
|---|---|---|---|---|---|---|
| | nach 0 h | nach 240 h | nach 600 h | nach 0 h | nach 240 h | nach 600 h |
| 1 | n.B. | 45 | 38 | 3 050 | 2 850 | 2 600 |
| 2 | 78 | 58 | 56 | 9 650 | 9 950 | 9 700 |
| 3 | n.B. | 48 | 42 | 3 100 | 3 000 | 2 750 |
| 4 | 81 | 69 | 58 | 9 600 | 9 800 | 9 600 |
| 5 | 80 | 61 | 49 | 9 650 | 10 050 | 9 550 |
| 6 | 80 | 67 | 54 | 9 550 | 10 000 | 9 650 |
| 7 | 81 | 64 | 50 | 9 600 | 9 950 | 9 650 |
| 8 | 80 | 65 | 49 | 9 650 | 10 100 | 9 750 |
| 9 | 81 | 68 | 58 | 9 550 | 9 700 | 9 600 |
| 10 | n.B. | 12 | 5 | 3 050 | 2 600 | <1 500 |
| 11 | n.B. | 13 | 4 | 2 960 | 2 550 | <1 500 |
| 12 | 77 | 28 | 25 | 9 600 | 11 500 | 9 000 |
| 13 | 79 | 30 | 27 | 9 650 | 11 200 | 8 850 |
| Alle Produkte 1-9 der erfindungsgemäßen Zusammensetzung zeigen verbesserte Wärmeformbeständigkeit bei verbessertem Farbton nach der Konfektionierung. | | | | | | |

D. Darstellung des Phosphinchelatliganden aus Beispiel 9
a. Herstellung von Cyclohexylphosphonyldichlorid
   In eine Mischung aus 337 g (4 mol) Cyclohexan und 275 g (2 mol) Phosphortrichlorid wurde unter Rühren und Kühlung ein Sauerstoffstrom geleitet, daß die Innentemperatur in einem Bereich von 15 bis 25°C blieb.
   Die Reaktionsmischung wurde im Vakuum fraktionierend destilliert. Es wurden 115 g Cyclohexylphosphonyldichlorid (Siedepunkt 141°C bei 1,2 Torr) als Öl erhalten, das in weißen Nadeln kristallierte.
b. Herstellung von Cyclohexylmonophosphin 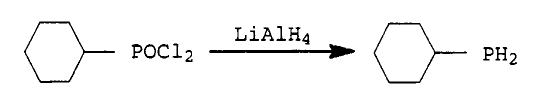
   Unter Stickstoffatmosphäre wurden zu einer gekühlten Mischung aus 22 g (0,58 mol) Lithiumaluminiumhydrid in 400 ml Ether eine Lösung von 60 g (0,3 mol) Cyclohexylphosphonyldichlorid in 100 ml Ether langsam getropft, so daß die Temperatur 15°C nicht überschritt.
   Anschließend wurde noch 30 Minuten zum Rückfluß erwärmt, abgekühlt und mit 500 ml halbkonzentrierter Salzsäure versetzt. Die organische Phase wurde abgetrennt, über Magnesiumsulfat getrocknet und fraktionierend destilliert (Siedepunkt 143 bis 146°C). Ausbeute: 17 g

c. Herstellung von 1,3-Bis-(cyclohexylphosphino)propan 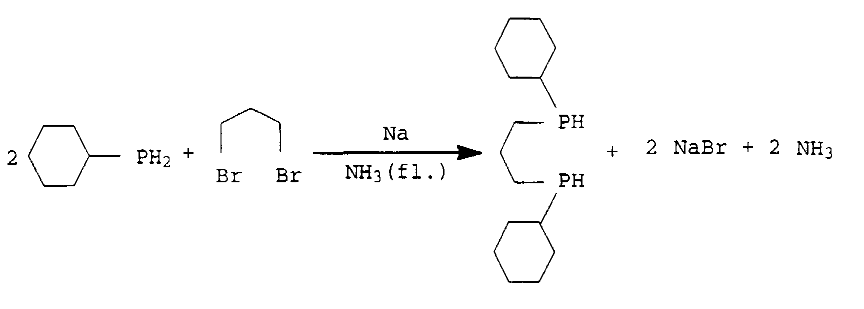
In 215 ml flüssigem Ammoniak wurden 2 g (0,086 mol) Natrium gelöst und eine Spatelspitze Rost zugesetzt. Nach 4 Stunden war alles Natrium zum Amid umgesetzt. Zu dieser Suspension wurden bei -60°C 10 g (0,086 mol) Cyclohexylmonophosphin dosiert und 10 h bei dieser Temperatur gerührt. Zur resultierenden grüngelben Lösung wurden innerhalb von 90 Minuten 8,68 g (0,043 mol) 1,3-Dibrompropan, gelöst in 10 ml Ether, getropft. Nach weiteren 30 Minuten wurde die Kühlung entfernt und der verdampfende Ammoniak durch Ether ersetzt. Die etherische Mischung wurde 30 Minuten zum Rückfluß erwärmt. Zur Aufarbeitung wurde mit 250 ml Ether und 200 ml Wasser versetzt und extraktiv aufgearbeitet. Nach Trocknen der organischen Phase über Natriumsulfat wurde eingeengt und der Rückstand im Vakuum destilliert.
d. Herstellung von 1,3-Bis-[(2-mercaptoethyl)cyclohexylphosphino]propan 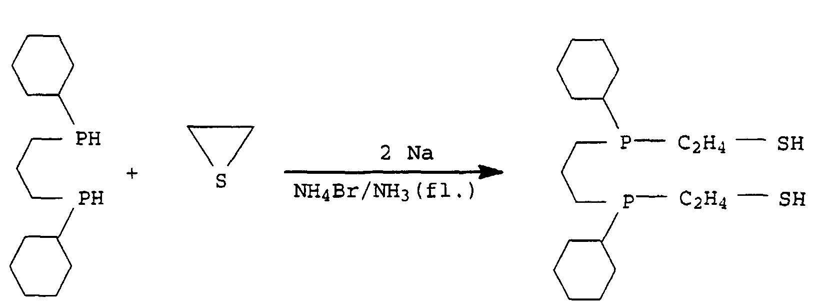
In 100 ml flüssigem Ammoniak wurde 4,6 g (0,2 mol) Natrium gelöst und bei -50°C wurden 27,2 g (0,1 mol) 1,3-Bis-(cyclohexylphosphino)propan zudosiert. Die Mischung wurde bei dieser Temperatur 4 h gerührt und anschließend 12 g (0,2 mol) Thiiran zudosiert. Nach Abdampfen des Ammoniaks wurde 2 h bei 40°C gerührt. Das Reaktionsgemisch wurde destillativ aufgearbeitet.

## Patentansprüche

1. Thermoplastische Formmassen, enthaltend
| | |
|---|---|
| 30 bis 100 Gew.-% | einer Mischung aus Polyamid und einer stabilisierend wirksamen Menge einer Kupferverbindung erhältlich durch Umsetzung von Kupfer(I)salzen mit Phosphinchelatliganden und |
| | |
| 0 bis 70 Gew.-% | weiterer Zusatzstoffe. |

2. Thermoplastische Formmassen nach Anspruch 1, wobei die Kupferverbindung in einer Menge von 10 bis 1 000 ppm Kupfer, bezogen auf Polyamid, vorliegt.

3. Thermoplastische Formmassen nach Anspruch 1, die bis zu 70 Gew.-% weitere Zusatzstoffe enthalten.

4. Thermoplastische Formmassen nach Anspruch 1, in denen die Kupferverbindungen durch Umsetzung von Kupferhalogeniden mit Phosphinchelatliganden erhalten werden.

5. Thermoplastische Formmassen nach Anspruch 1, in denen die Kupferverbindungen durch Umsetzung von Kupfer(I)salzen mit Phosphinchelatliganden der allgemeinen Formel I 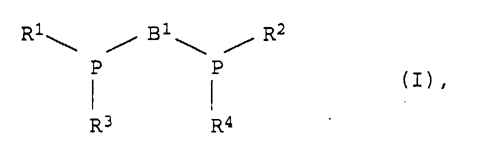 in der
B¹ C₁-C₆-Alkylen, Naphthylen, Phenylen, Benzylen,
R¹ und R² unabhängig voneinander C₁-C₈-Alkyl, C₅-C₈-Cycloalkyl oder Phenyl, das gegebenenfalls 1 bis 5fach mit C₁-C₄-Alkyl substituiert ist,
R³ und R⁴ unabhängig voneinander C₁-C₈-Alkyl, C₅-C₈-Cycloalkyl, Phenyl, das gegebenenfalls mit C₁-C₄-Alkyl substituiert ist, -B¹-PR²R², B²-SR⁵, B²-OR⁵ sowie R³ und R⁴ gemeinsam -B²-PR²-B³- oder -B²-PR²-B³-PR²-B⁴-bedeuten und B², B³, B⁴ unabhängig voneinander für C₁-C₆-Alkylen, Naphthylen, Phenylen, Benzylen und
R⁵ für C₁-C₄-Alkyl oder Wasserstoff stehen,
erhalten werden.

6. Thermoplastische Formmassen nach Anspruch 1, in denen die Kupferverbindung durch Umsetzung von Kupfer(I)salzen mit Phosphinchelatliganden der allgemeinen Formel (II) 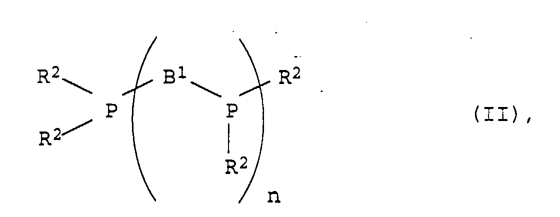 in der
B¹ C₁-C₆-Alkylen, Naphthylen, Phenylen, Benzylen,
R² C₁-C₈-Alkyl, C₅-C₈-Cycloalkyl oder Phenyl, das gegebenenfalls 1 bis 5-fach mit C₁-C₄-Alkyl substituiert ist und
n eine Zahl 1, 2 oder 3 bedeuten,
erhalten wird.

7. Thermoplastische Formmassen nach Anspruch 1, in denen die Kupfer(I)verbindungen erhältlich sind durch Umsetzung von Kupfer(I)salzen mit Phosphorsulfoverbindungen der Formel (III) 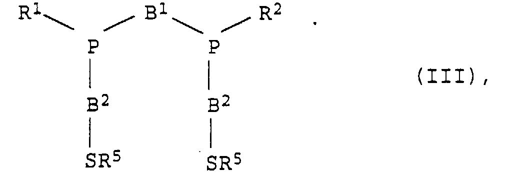 in der
B¹ und B² unabhängig voneinander C₁-C₆-Alkylen, Naphthylen, Phenylen, Benzylen,
R¹ und R² unabhängig voneinander C₁-C₈-Alkyl, C₅-C₈-Cycloalkyl oder Phenyl, das gegebenenfalls mit C₁-C₄-Alkyl substituiert ist, und
R⁵ C₁-C₄-Alkyl oder Wasserstoff
bedeuten.

8. Thermoplastische Formmassen nach Anspruch 1, die weiterhin 1 bis 3 000 ppm eines Alkalihalogenids, bezogen auf Polyamid, enthalten.

9. Verwendung der thermoplastischen Formmassen gemäß den Ansprüchen 1 bis 8 zur Herstellung von Fasern, Folien und Formkörpern.

10. Fasern, Folien und Formkörper erhältlich aus den thermoplastischen Formmassen gemäß den Ansprüchen 1 bis 8.

## Claims

1. A thermoplastic molding material containing
| | |
|---|---|
| from 30 to 100 % by weight | of a mixture of polyamide and a stabilizing amount of a copper compound obtainable by reacting copper(I) salts with phosphine chelate ligands and |
| | |
| from 0 to 70 % by weight | of further additives. |

2. A thermoplastic molding material as claimed in claim 1, wherein the copper compound is present in an amount of from 10 to 1000 ppm, calculated as copper and based on polyamide.

3. A thermoplastic molding material as claimed in claim 1, which contains up to 70 % by weight of further additives.

4. A thermoplastic molding material as claimed in claim 1, in which the copper compound is obtained by reacting a copper halide with a phosphine chelate ligand.

5. A thermoplastic molding material as claimed in claim 1, in which the copper compound is obtained by reacting a copper(I) salt with a phosphine chelate ligand of the formula I 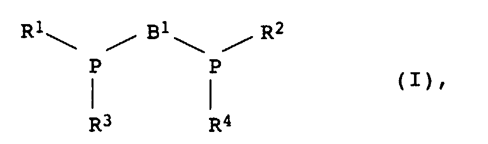 where
B¹ is C₁-C₆-alkylene, naphthylene, phenylene or benzylene,
R¹ and R², independently of one another, are each C₁-C₈-alkyl, C₅-C₈-cycloalkyl or phenyl which is unsubstituted or monosubstituted to pentasubstituted by C₁-C₄-alkyl,
R³ and R⁴, independently of one another, are each C₁-C₈-alkyl, C₅-C₈-cycloalkyl, phenyl which is unsubstituted or substituted by C₁-C₄-alkyl, or are each -B¹-P^{R2}R², B²-SR⁵ or B²-OR⁵, and R³ and R⁴ together are -B²-PR²-B³- or -B²-PR²-B³-PR²-B⁴-, and B², B³ and B⁴, independently of one another, are each C₁-C₆-alkylene, naphthylene, phenylene or benzylene and
R⁵ is C₁-C₄-alkyl or hydrogen.

6. A thermoplastic molding material as claimed in claim 1, in which the copper compound is obtained by reacting a copper(I) salt with a phosphine chelate ligand of the formula (II) 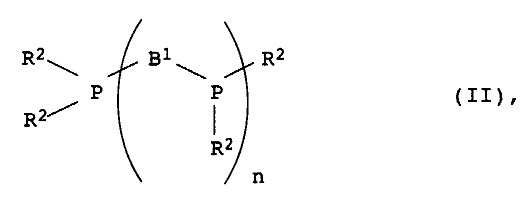 where
B¹ is C₁-C₆-alkylene, naphthylene, phenylene or benzylene,
R² is C₁-C₈-alkyl, C₅-C₈-cycloalkyl or phenyl which is unsubstituted or monosubstituted to pentasubstituted by C₁-C₄-alkyl and
n is 1, 2 or 3.

7. A thermoplastic molding material as claimed in claim 1, in which the copper(I) compound is obtainable by reacting a copper(I) salt with a phosphorus-sulfur compound of the formula (III) 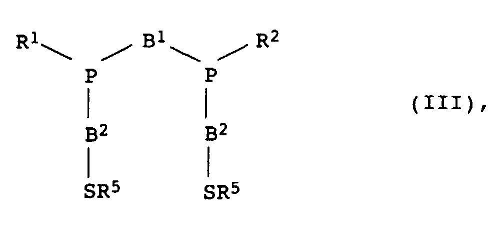 where
B¹ and B², independently of one another, are each C₁-C₆-alkylene, naphthylene, phenylene or benzylene,
R¹ and R², independently of one another, are each C₁-C₈-alkyl, C₅-C₈-cycloalkyl or phenyl which is unsubstituted or substituted by C₁-C₄-alkyl and
R⁵ is C₁-C₄-alkyl or hydrogen.

8. A thermoplastic molding material as claimed in claim 1, which furthermore contains from 1 to 3000 ppm, based on polyamide, of an alkali metal halide.

9. Use of a thermoplastic molding material as claimed in any of claims 1 to 8 for the production of fibers, films and moldings.

10. A fiber, film or molding obtainable from a thermoplastic molding material as claimed in any of claims 1 to 8.

## Revendications

1. Masses à mouler thermoplastiques, contenant de 30 à 100% en poids d'un mélange de polyamide et d'une quantité à action stabilisatrice d'un composé de cuivre que l'on peut obtenir par réaction de sels de cuivre(I) avec des ligands chélatants phosphiniques, et de 0 à 70% en poids d'autres additifs.

2. Masses à mouler thermoplastiques selon la revendication 1, caractérisée en ce que le composé de cuivre est présent en quantités de 10 à 1000 ppm de cuivre par rapport au polyamide.

3. Masses à mouler thermoplastiques selon la revendication 1, contenant jusqu'à 70% d'autres additifs.

4. Masses à mouler thermoplastiques selon la revendication 1, caractérisées en ce que les composés de cuivre sont obtenus par réaction d'halogénures de cuivre avec des ligands chélatants phosphiniques.

5. Masses à mouler thermoplastiques selon la revendication 1, caractérisées en ce que les composés de cuivre sont obtenus par réaction de sels de cuivre (I) avec des ligands chélatants phosphiniques de la formule générale I 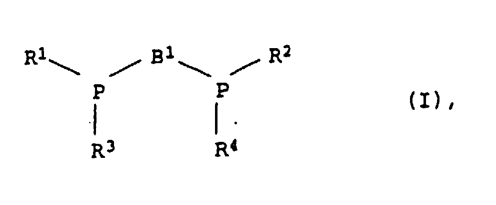 dans laquelle
B¹ représente un radical alkylène en C₁ à C₆, naphtylène, phénylène, benzylène,
R¹ et R² représentent indépendamment l'un de l'autre un radical alkyle en C₁ à C₈, cycloalkyle en C₅ à C₈ ou phényle, qui peut éventuellement être substitué de 1 à 5 fois par des radicaux alkyle en C₁ à C₄,
R³ et R⁴ représentent indépendamment l'un de l'autre des radicaux alkyle en C₁ à C₈, cycloalkyle en C₅ à C₈, phényle, qui peuvent éventuellement être substitués par des radicaux alkyle en C₁ à C₄, -B¹PR²R², B²-SR⁵, B²-OR⁵, ou bien R³ et R⁴ peuvent représenter ensemble -B²-PR²B³- ou -B²-PR²B³-PR²-B⁴- et B², B³ et B⁴ représentent indépendamment l'un de l'autre un radical alkylène en C₁ à C₆, naphtyléne, phénylène, benzylène, et
R⁵ représente un radical alkyle en C₁ à C₄ ou l'hydrogène.

6. Masses à mouler thermoplastiques selon la revendication 1, caractérisées en ce que le composé de cuivre est obtenu par réaction de sels de cuivre (I) avec des ligands chélatants phosphiniques de la formule générale (II) 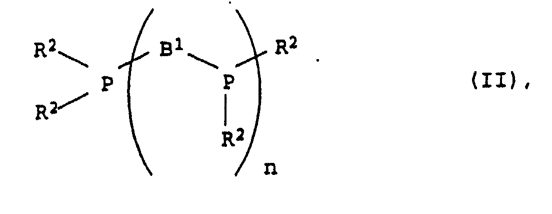 dans laquelle
B¹ représente un radical alkylène en C₁ à C₆, naphtylène, phénylène, benzylène,
R² représente un radical alkyle en C₁ à C₈, cycloalkyle en C₅ à C₈ ou phényle, qui peut éventuellement être substitué de 1 à 5 fois par des radicaux alkyle en C₁ à C₄, et
n est un nombre entier égal à 1, 2 ou 3.

7. Masses à mouler thermoplastiques selon la revendication 1, caractérisées en ce que les composés de cuivre (I) peuvent être obtenus par réaction de sels de cuivre (I) avec des composés sulfoniques phosphorés de la formule (III) 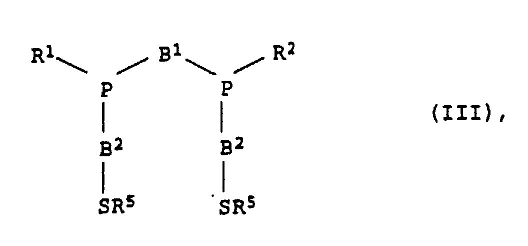 dans laquelle
B¹ et B² représentent indépendamment l'un de l'autre des radicaux alkylène en C₁ à C₆, naphtylène, phénylène, benzylène,
R¹ et R² représentent indépendamment l'un de l'autre des radicaux alkyle en C₁ à C₈, cycloalkyle en C₅ à C₈ ou phényle, qui peuvent éventuellement être substitués par des radicaux alkyle en C₁ à C₄, et
R⁵ représente un radical alkyle en C₁ à C₄ ou l'hydrogène.

8. Masses à mouler thermoplastiques selon la revendication 1, caractérisées en ce qu'elles contiennent en outre de 1à 3000 ppm d'un halogénure de métal alcalin, par rapport au polyamide.

9. Utilisation des masses à mouler thermoplastiques selon les revendications 1 à 8 pour la production de fibres, de feuilles et d'articles moulés.

10. Fibres, feuilles et articles moulés que l'on peut produire à partir des masses à mouler thermoplastiques selon les revendications 1 à 8.
